# EUROPEAN PATENT APPLICATION

(11) **EP 4 737 178 A1**
(43) Date of publication of application: **06.05.2026**
(21) Application number: 24831402.3
(22) Date of filing: 01.05.2024
(51) Int. Cl.: B60K 15/063, B60K 1/00, B60K 1/04, B60K 8/00, B62D 25/06

(54) **WORK VEHICLE**

(30) Priority: 30.06.2023 JP 2023107639; 30.06.2023 JP 2023107666
(71) Applicant: Kubota Corporation, Osaka 556-8601 (JP)
(72) Inventor: TAKAKI, Takahiro, Sakai-shi, Osaka 590-0908 (JP)
(74) Representative: Cabinet Beau de Loménie
(86) International application number: PCT/JP2024/016829
(87) International publication number: WO 2025/004529

(57) **Abstract**

The present disclosure relates to a work vehicle. A work vehicle of the present disclosure includes: a vehicle body; a driver's seat, an electric motor, and a fuel cell module each installed on the vehicle body; a cabin disposed around the driver's seat; a hydrogen pipe and a hydrogen tank through and from which hydrogen is supplied to the fuel cell module; and a tank case disposed above the cabin and accommodating the hydrogen tank. The tank case includes a lower plate covering a lower surface of the hydrogen tank, side plates covering side surfaces of the hydrogen tank, and an upper plate covering an upper surface of the hydrogen tank, and has a first vent that is open in the lower plate.

## Description

### TECHNICAL FIELD

The present disclosure relates to a work vehicle.

### BACKGROUND ART

A work vehicle including an electric motor and a battery has conventionally been known (see Patent Literature 1). In the work vehicle disclosed in Patent Literature 1, the battery is disposed in a hood. The work vehicle disclosed in Patent Literature 1 is a tractor.

### CITATION LIST

### [PATENT LITERATURE]

PATENT LITERATURE 1: Japanese Laid-Open Patent Publication No. 2022-060655

### SUMMARY OF THE INVENTION

A work vehicle of the present disclosure includes: a vehicle body; a driver's seat, an electric motor, and a fuel cell module each installed on the vehicle body; a cabin disposed around the driver's seat; a hydrogen pipe and a hydrogen tank through and from which hydrogen is supplied to the fuel cell module; and a tank case disposed above the cabin and accommodating the hydrogen tank, and the tank case includes a lower plate covering a lower surface of the hydrogen tank, side plates covering side surfaces of the hydrogen tank, and an upper plate covering an upper surface of the hydrogen tank, and has a first vent that is open in the lower plate.

A work vehicle of the present disclosure includes: a vehicle body; a driver's seat, an electric motor, and a fuel cell module each installed on the vehicle body; a cabin disposed around the driver's seat; a hydrogen pipe and a hydrogen tank through and from which hydrogen is supplied to the fuel cell module; and a tank case disposed above the cabin and accommodating the hydrogen tank, and the tank case includes a lower plate covering a lower surface of the hydrogen tank, a side plate covering a side surface of the hydrogen tank, and an upper plate covering an upper surface of the hydrogen tank, and has an openable/closable door supported at the side plate in an openable/closable manner with a hinge.

According to the present disclosure, in a work vehicle including a fuel cell module, a hydrogen tank can be accurately protected by a tank case. According to the present disclosure, in a work vehicle including a tank case for a hydrogen tank, maintenance of the hydrogen tank can be facilitated.

### BRIEF DESCRIPTION OF DRAWINGS

[FIG. 1] FIG. 1 is a perspective view illustrating a work vehicle according to an embodiment of the present disclosure.
[FIG. 2] FIG. 2 is a front view illustrating the work vehicle according to the embodiment of the present disclosure.
[FIG. 3] FIG. 3 is a rear view illustrating the work vehicle according to the embodiment of the present disclosure.
[FIG. 4] FIG. 4 is a right side view illustrating the work vehicle according to the embodiment of the present disclosure.
[FIG. 5] FIG. 5 is a left side view illustrating the work vehicle according to the embodiment of the present disclosure.
[FIG. 6] FIG. 6 is a plan view illustrating the work vehicle according to the embodiment of the present disclosure.
[FIG. 7] FIG. 7 is a bottom view illustrating the work vehicle according to the embodiment of the present disclosure.
[FIG. 8] FIG. 8 is a partially exploded perspective view illustrating the work vehicle of the present disclosure.
[FIG. 9] FIG. 9 is a left side view of the work vehicle from which some components are removed.
[FIG. 10] FIG. 10 is a perspective view of a tank case.
[FIG. 11] FIG. 11 is an explanatory view of a placement of the tank case in the work vehicle.
[FIG. 12] FIG. 12 is a schematic sectional view of a tank and the tank case.
[FIG. 13] FIG. 13 is a perspective view illustrating the tank case in a state in which an openable/closable door is open, and a tank in the tank case.

### DETAILED DESCRIPTION

### <Problems to be solved by the invention>

Consideration has recently been given to work vehicles that travel in such a manner that an electric motor is driven using electric power generated from hydrogen as fuel by a fuel cell module. Such work vehicles include a hydrogen tank configured to store the hydrogen. It has conventionally been desired to develop a tank case capable of accurately protecting the hydrogen tank from an external impact, a temperature rise, and the like. It has been required for the tank case to facilitate maintenance of the hydrogen tank accommodated in the tank case.

An object of to the present disclosure is, in a work vehicle including a fuel cell module, to accurately protect a hydrogen tank by a tank case. Another object of the present disclosure is, in a work vehicle including a tank case for a hydrogen tank, to facilitate maintenance of the hydrogen tank.

### <Advantageous effect of the invention>

According to the present disclosure, in a work vehicle including a fuel cell module, it is possible to accurately protect a hydrogen tank by a tank case. According to the present disclosure, in a work vehicle including a tank case for a hydrogen tank, it is possible to facilitate maintenance of the hydrogen tank.

### <Outline of embodiments of the present disclosure>

An outline of below-listed embodiments of the present disclosure is described.
(1) A work vehicle of the present embodiment includes: a vehicle body; a driver's seat, an electric motor, and a fuel cell module each installed on the vehicle body; a cabin disposed around the driver's seat; a hydrogen pipe and a hydrogen tank through and from which hydrogen is supplied to the fuel cell module; and a tank case disposed above the cabin and accommodating the hydrogen tank, and the tank case includes a lower plate covering a lower surface of the hydrogen tank, side plates covering side surfaces of the hydrogen tank, and an upper plate covering an upper surface of the hydrogen tank, and has a first vent that is open in the lower plate.

According to the work vehicle of the embodiment described in (1), it is possible to accurately protect the hydrogen tank from an external impact, a temperature rise, and the like. It is thus possible to, in the work vehicle including the fuel cell module, accurately protect the hydrogen tank by the tank case.

(2) Preferably, in the work vehicle of the embodiment described in (1), the tank case further has a second vent being open in an upper portion of the side plate. According to the work vehicle having this configuration, it is possible to reliably reduce a possibility of a temperature rise inside the tank case. It is thus possible to accurately protect the hydrogen tank. It is also possible to accurately protect the hydrogen tank while securing maintainability of the hydrogen tank.
(3) Preferably, the work vehicle of the embodiment described in (2) further includes a hydrogen sensor, and the hydrogen sensor is disposed in the tank case at a position adjacent to the second vent. According to the work vehicle having this configuration, it is possible to reliably detect leakage of hydrogen in the tank case by the hydrogen sensor. It is thus possible to accurately protect the hydrogen tank.
(4) Preferably, in the work vehicle of the embodiment described in (2) or (3), the upper plate is disposed to be inclined with respect to the lower plate, and the second vent is open in the upper portion of the side plate adjacent to a portion of the upper plate, the portion being farthest from the lower plate. According to the work vehicle having this configuration, it is possible to reliably discharge hydrogen leaked in the tank case, out of the tank case. It is thus possible to accurately protect the hydrogen tank.
(5) Preferably, in the work vehicle of the embodiment described in any one of (2) to (4), the tank case includes a pair of the side plates that are opposite to each other, and has a pair of the second vents that are respectively open in the side plates. According to the work vehicle having this configuration, it is possible to naturally ventilate the tank case since air flowed into the tank case through the first vent is discharged from the tank case through the second vents by natural convection. It is therefore possible to reliably discharge hydrogen leaked in the tank case, out of the tank case. It is thus possible to accurately protect the hydrogen tank.
(6) Preferably, in the work vehicle of the present disclosure, the tank case has an openable/closable door supported at the side plate in an openable/closable manner with a hinge.

According to the work vehicle of the embodiment described in (6), it is possible to, in the work vehicle including the tank case accommodating the hydrogen tank, facilitate the maintenance of the hydrogen tank.

(7) Preferably, in the work vehicle of the embodiment described in (6), the hydrogen tank includes a valve configured to adjust an amount of hydrogen flowing into the hydrogen tank and an amount of hydrogen flowing out of the hydrogen tank, and the side plate facing the valve is a first side plate, and the openable/closable door is disposed on the first side plate. According to the work vehicle having this configuration, it is possible to easily open and close the first side plate of the tank case. It is thus possible to facilitate maintenance of the valve disposed immediately behind the first side plate. It is also possible to accurately protect the hydrogen tank while securing the maintainability of the hydrogen tank.
(8) Preferably, in the work vehicle of the embodiment described in (7), the tank case includes a second side plate extending in parallel with the first side plate, and the openable/closable door is further disposed on the second side plate. According to the work vehicle having this configuration, it is possible to facilitate the maintenance of the entire hydrogen tank.
(9) Preferably, in the work vehicle of the embodiment described in any one of (6) to (8), the upper plate is inclined with respect to the lower plate in the tank case. According to the work vehicle having this configuration, it is possible to drain rainwater on the upper plate of the tank case, to a lower side of the tank case promptly.
(10) Preferably, in the work vehicle of the embodiment described in (9), the tank case includes a third side plate and a fourth side plate each extending perpendicular to the first side plate and the second side plate, and the upper plate is inclined downward toward at least one of the third side plate and the fourth side plate. According to the work vehicle having this configuration, it is possible to drain rainwater on the upper plate of the tank case, toward a place where the openable/closable door is not disposed. It is thus possible to secure the maintainability of the hydrogen tank. According to the work vehicle having this configuration, it is also possible to reduce a possibility that rainwater enters the tank case.

### <Details of embodiments of the present disclosure>

Details of embodiments of the present disclosure are described below with reference to the drawings. It should be noted that at least some of the embodiments described below may be arbitrarily combined with each other.

### [Overall configuration of work vehicle]

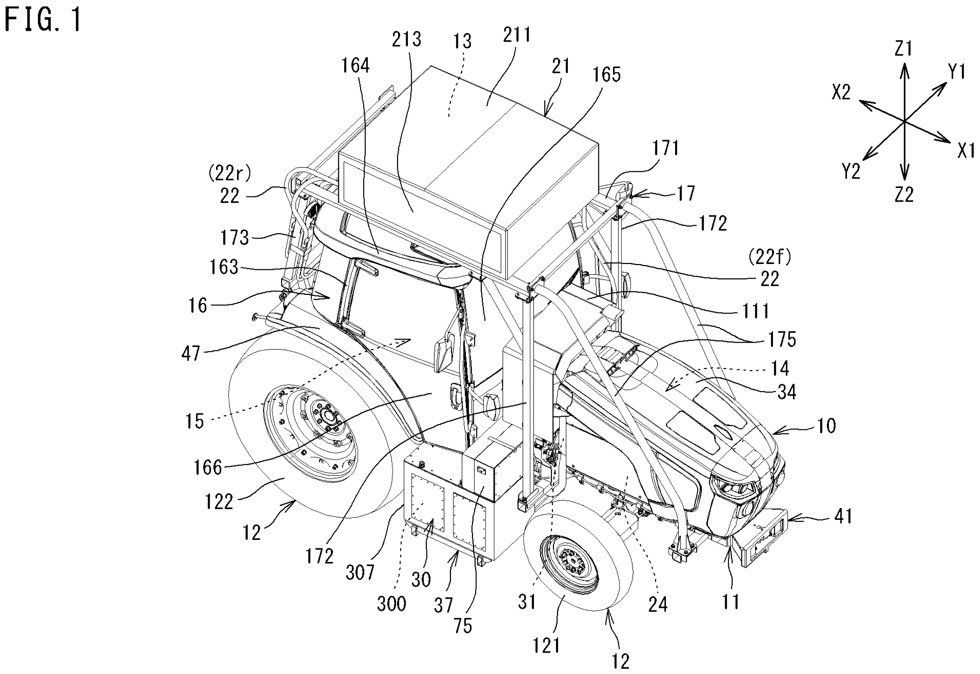

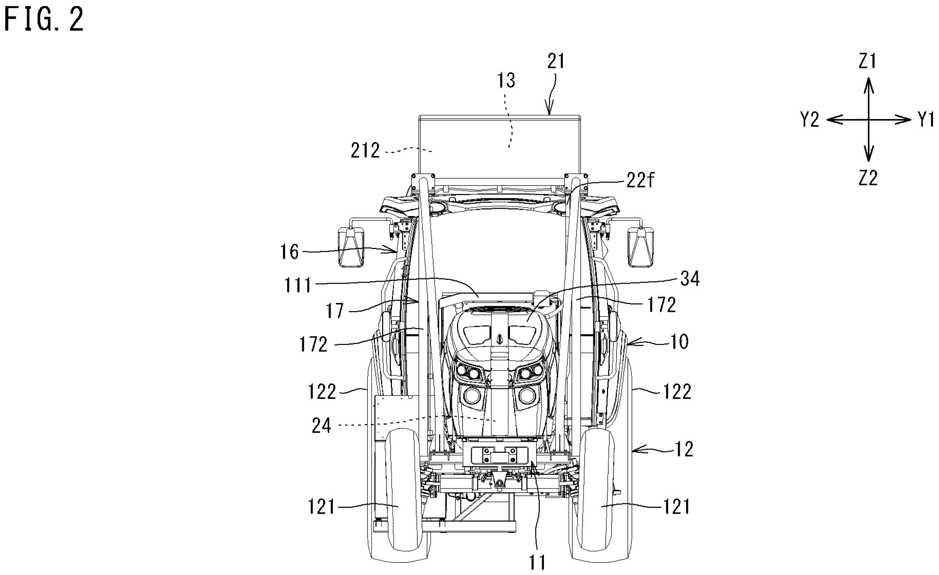

FIG. 1 is a perspective view illustrating a work vehicle according to an embodiment of the present disclosure. FIGs. 2, 3, 4, 5, 6, and 7 are respectively a front view, a rear view, a side view (a left side view), a side view (a right side view), a plan view, and a bottom view of the work vehicle illustrated in FIG. 1.

A work vehicle 10 of the present embodiment is a vehicle that can be used for farmwork. The work vehicle 10 illustrated in FIG. 1 is a tractor. The work vehicle is not limited to a tractor. Examples of the work vehicle according to the present invention may include an agricultural machine different from a tractor, a construction machine, a utility beagle vehicle, and the like.

The following terminology defines the directions of the work vehicle 10 of the present disclosure. The term "front" refers to the direction in which the work vehicle 10 travels forward. The term "rear" refers to the direction in which the work vehicle 10 travels backward. The term "left" refers to the left side when the work vehicle 10 is directed forward. The term "right" refers to the right side when the work vehicle 10 is directed forward. The term "vehicle-width direction" refers to the left-right direction perpendicular to the front-rear direction. The term "up-down direction" refers to the direction perpendicular to both the front-rear direction and the vehicle-width direction (the left-right direction). The up-down direction is also referred to as the height direction.

Each drawing depicts an orthogonal three-dimensional coordinate system. In each drawing, arrow X1 indicates the forward direction, and arrow X2 indicates the rearward direction. Also in each drawing, arrow Y1 indicates the leftward direction, and arrow Y2 indicates the rightward direction. Also in each drawing, arrow Z1 indicates the upward direction, and arrow Z2 indicates the downward direction.

The work vehicle 10 illustrated in FIG. 1 includes a vehicle body 11, a traveling device 12 supporting the vehicle body 11 in a travelable manner, a driver's seat 15, a cabin 16, a tank unit 21 including a tank 13 configured to store fuel, and a drive device 14 to be driven using the fuel stored in the tank 13. The fuel is hydrogen. The tank 13 is a hydrogen tank configured to store hydrogen gas. The work vehicle 10 of the present embodiment is a fuel cell vehicle (FCV) and travels using electric power generated from hydrogen and oxygen by a fuel cell 24 (a fuel cell module).

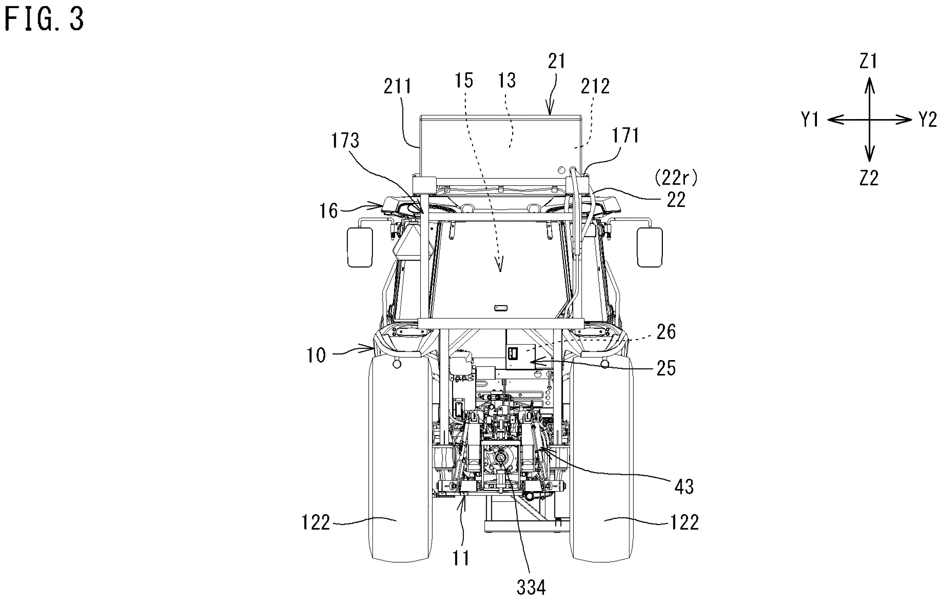

The work vehicle 10 includes, as the drive device 14, the fuel cell 24, a battery unit 30, and a motor 31 to be electrically driven. The battery unit 30 includes a battery 300 configured to store electric power generated by the fuel cell 24, and supplies the stored electric power to the motor 31. The work vehicle 10 includes pipes 22 for hydrogen gas (hydrogen pipes) and a filling unit 25 (see FIG. 3). The filling unit 25 has a filling port 26 (a receptacle) to which a filling nozzle of a hydrogen gas supply machine (not illustrated) is connected. The hydrogen gas supply machine is provided separately from the work vehicle 10. Hydrogen gas supplied from the hydrogen gas supply machine through the filling port 26 flows through one of the pipes 22 (a rear pipe 22r) and reaches the tank 13. The hydrogen gas stored in the tank 13 flows through the other pipe 22 (a front pipe 22f) and reaches the fuel cell 24. The specific configurations of the filling unit 25 and pipes 22 are described below.

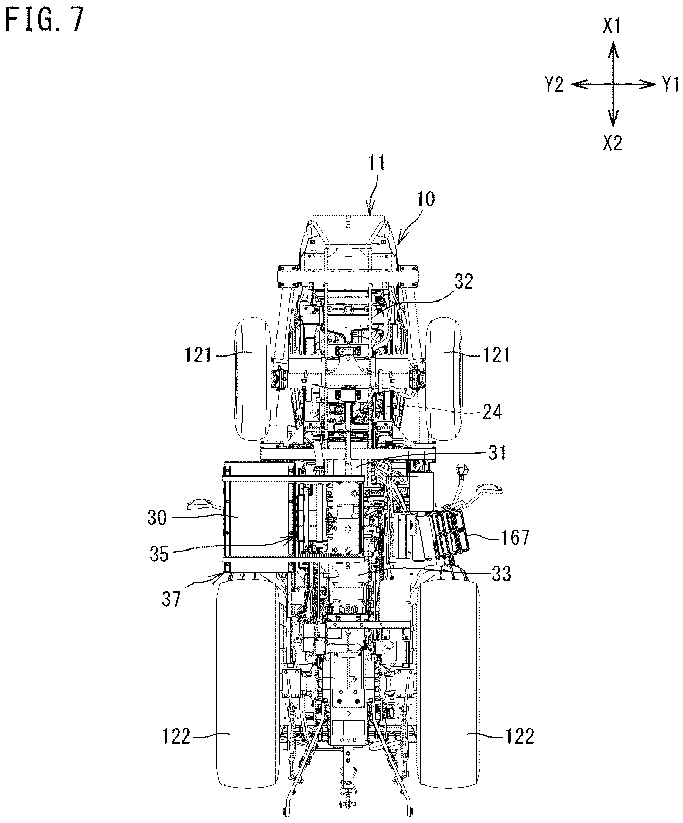

The work vehicle 10 (see FIG. 1) includes an installation frame 17 and a support structure 37. The installation frame 17 is a frame with which the tank unit 21 (the tank 13) is installed on the vehicle body 11. The support structure 37 is a component with which the battery unit 30 is supported on the vehicle body 11. The work vehicle 10 (see FIG. 7) includes a discharge path 35. The discharge path 35 serves as a path through which water or water vapor generated due to the operation of the fuel cell 24 is discharged externally. The specific configurations of the installation frame 17, support structure 37, and discharge path 35 are described below.

### [Vehicle body 11]

The vehicle body 11 includes a chassis 41, a hood 34, a cover 111, and fenders 47 with which rear wheels 122 are covered from above.

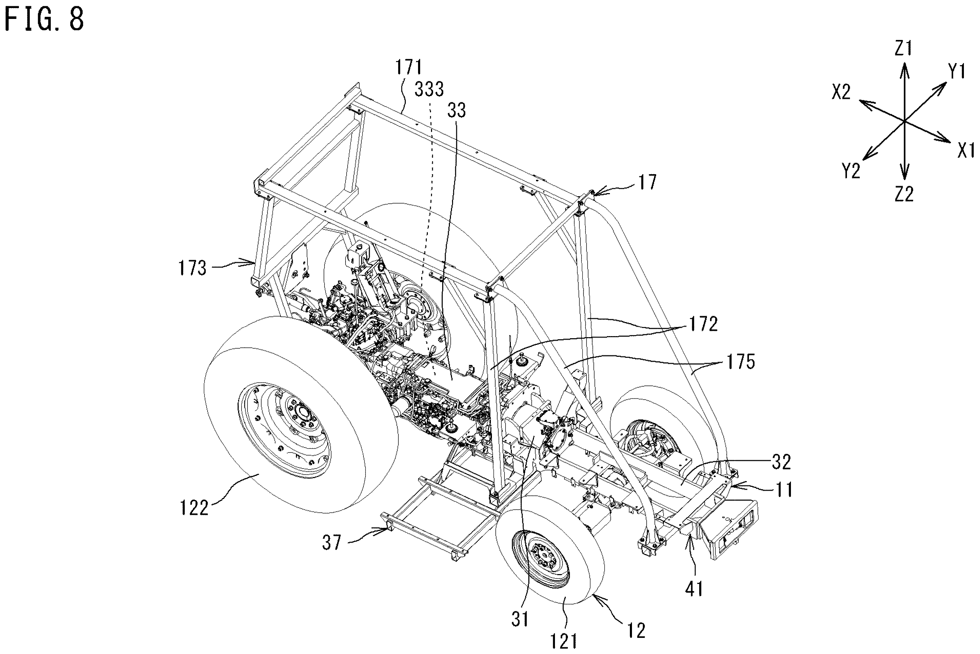

The chassis 41 supports the traveling device 12, the drive device 14, and the cabin 16. FIG. 8 is a partially exploded perspective view of the work vehicle 10 illustrated in FIG. 1. The chassis 41 is located at a center in the vehicle-width direction, and has a shape elongated in the vehicle front-rear direction. The chassis 41 includes a front frame 32 constituting a front portion of the chassis 41, and a gear case 33 constituting a rear portion of the chassis 41. The front frame 32 is a combination of, for example, frame members made of a metal. The gear case 33 has a box body made of a metal. The gear case 33 is coupled to a rear portion of the front frame 32. The gear case 33 and the front frame 32 cooperate to form a framework of the vehicle body 11.

The motor 31 is installed on the front frame 32. A power transmission mechanism 333 is accommodated in the gear case 33. The power transmission mechanism 333 includes a transmission, a clutch, a differential gear, and the like. The power transmission mechanism 333 decreases or increases a rotation speed of an output shaft of the motor 31, and outputs the resultant motive power to the traveling device 12 (front wheels 121 and/or the rear wheels 122).

The power transmission mechanism 333 outputs part of the motive power from the motor 31 to a PTO shaft 334 (see FIG. 3). The PTO shaft 334 is an output shaft disposed on a rear portion of the gear case 33. The work vehicle 10 includes a coupling device 43 configured to couple a separate instrument to the rear of the vehicle body 11. The PTO shaft 334 transmits the motive power from the motor 31 to the separate instrument coupled to the coupling device 43. The separate instrument is a working device (not illustrated) and is also referred to as an implement. The working device is operated by the motive power from the motor 31. The working device is, for example, a cultivator.

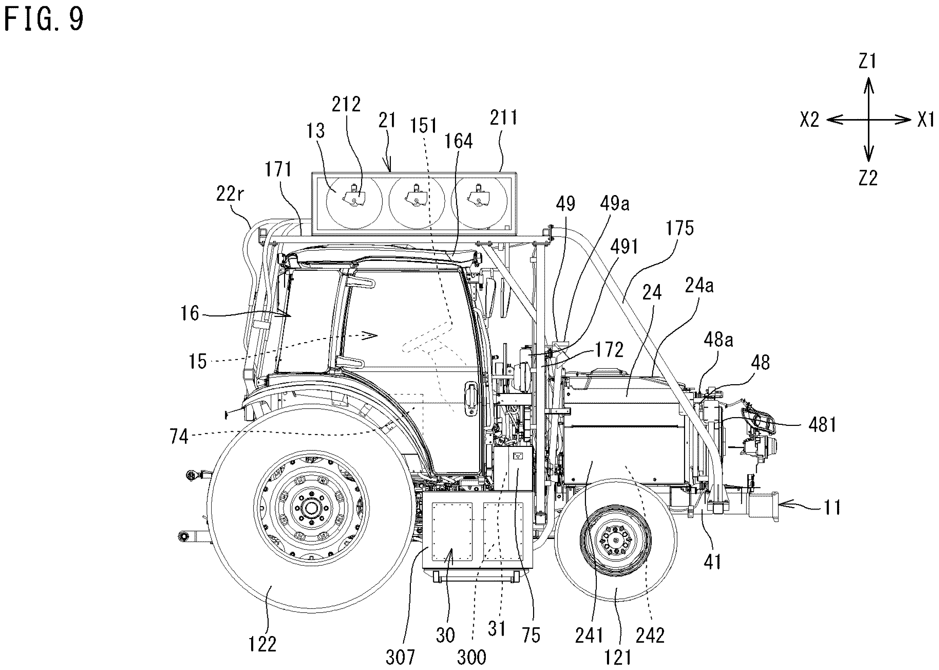

FIG. 9 is a left side view of the work vehicle 10, and illustrates the work vehicle 10 from which the hood 34, the cover 111, and a part of a tank case 211 of the tank unit 21 are removed. A first radiator 48, the fuel cell 24, and a second radiator 49 are arranged in this order from the front of the vehicle, and are installed on the chassis 41.

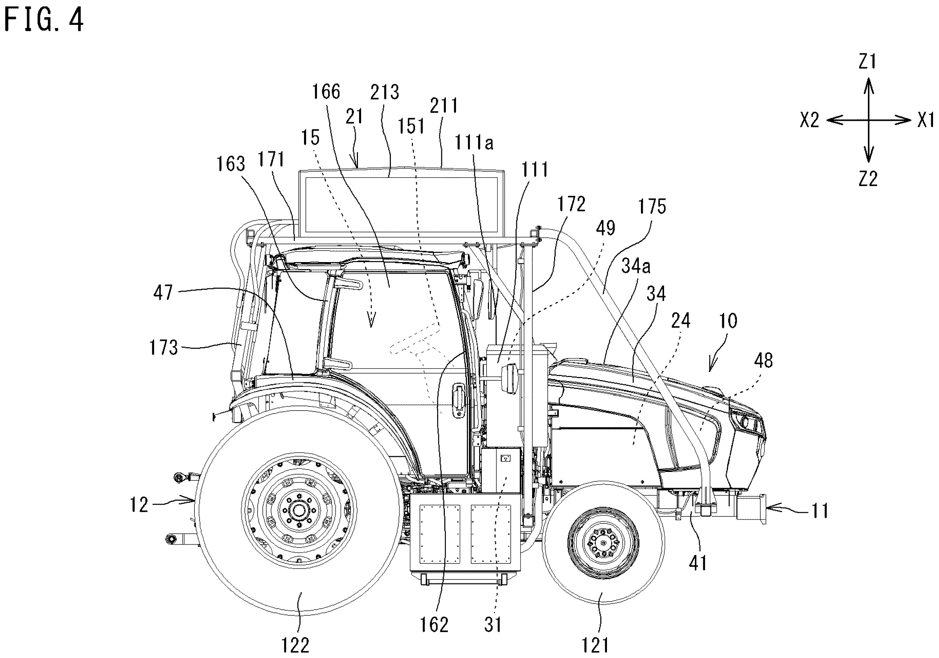

As illustrated in FIGs. 4 and 9, the hood 34 and the cover 111 cover installed components located near the front of the vehicle body 11. The hood 34 covers the fuel cell 24 and the first radiator 48 from above and laterally in the vehicle-width direction. The cover 111 covers the second radiator 49, which is located rearward of the fuel cell 24, from above and laterally in the vehicle-width direction.

An upper surface 48a of the first radiator 48 is lower in height than an upper surface 24a of the fuel cell 24. The upper surface 24a of the fuel cell 24 is lower in height than an upper surface 49a of the second radiator 49.

An upper surface 111a of the cover 111 is higher in height than an upper surface 34a of the hood 34, but is lower in height than an upper end of a steering wheel 151 to be operated for the sake of steering by an operator sitting in the driver's seat 15. The upper surface 34a of the hood 34 is gradually inclined downward from the rear toward the front. This configuration is less likely to obstruct the field of view of the operator sitting in the driver's seat 15.

### [Driver's seat 15 and cabin 16]

The driver's seat 15 and the cabin 16 are disposed on the chassis 41 and located near the rear (see FIG. 1). The driver's seat 15 is located within the cabin 16.

The cabin 16 includes front pillars 162 located forward of the driver's seat 15, rear pillars 163 located rearward of the driver's seat 15, and a roof 164 located above the driver's seat 15. One of the front pillars 162 is disposed diagonally in front to the left of the driver's seat 15, and the other front pillar 162 is disposed diagonally in front to the right of the driver's seat 15. One of the rear pillars 163 is disposed diagonally behind to the left of the driver's seat 15, and the other rear pillar 163 is disposed diagonally behind to the right of the driver's seat 15. The roof 164 is supported by the front pillars 162 and the rear pillars 163.

The cabin 16 includes a windshield 165 located forward of the driver's seat 15. The windshield 165 is disposed between the left and right front pillars 162. The cabin 16 includes doors 166 that are openable and closable. The doors 166 are respectively disposed on the opposite sides in the vehicle-width direction. Each of the doors 166 is disposed between a corresponding one of the front pillars 162 and a corresponding one of the rear pillars 163.

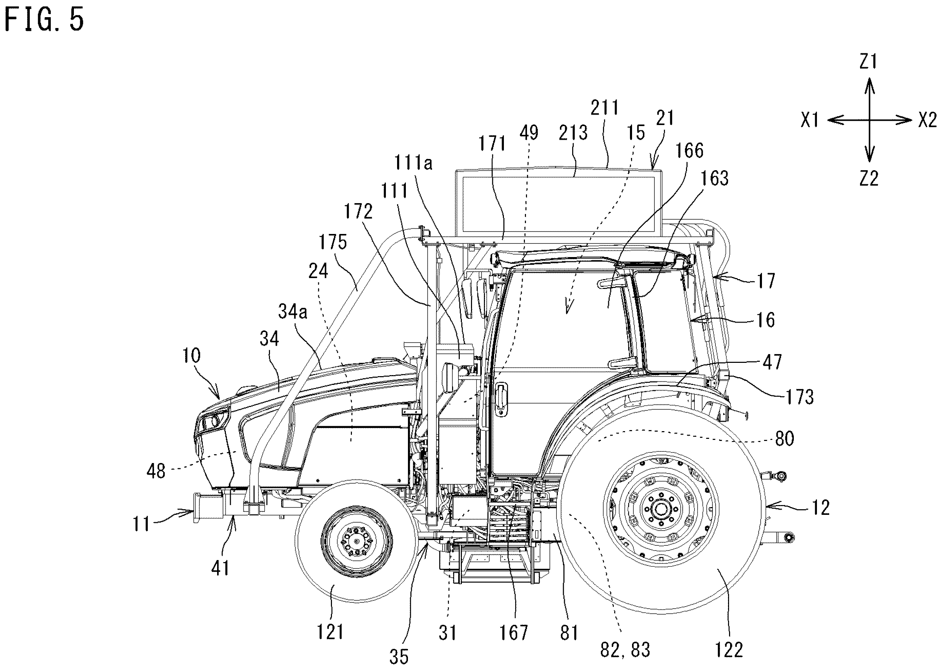

The cabin 16 has a step 167 on its one side (left side) in the width direction of the vehicle body (see FIG. 5). The step 167 is a member on which the operator puts his/her foot when entering and leaving the cabin 16.

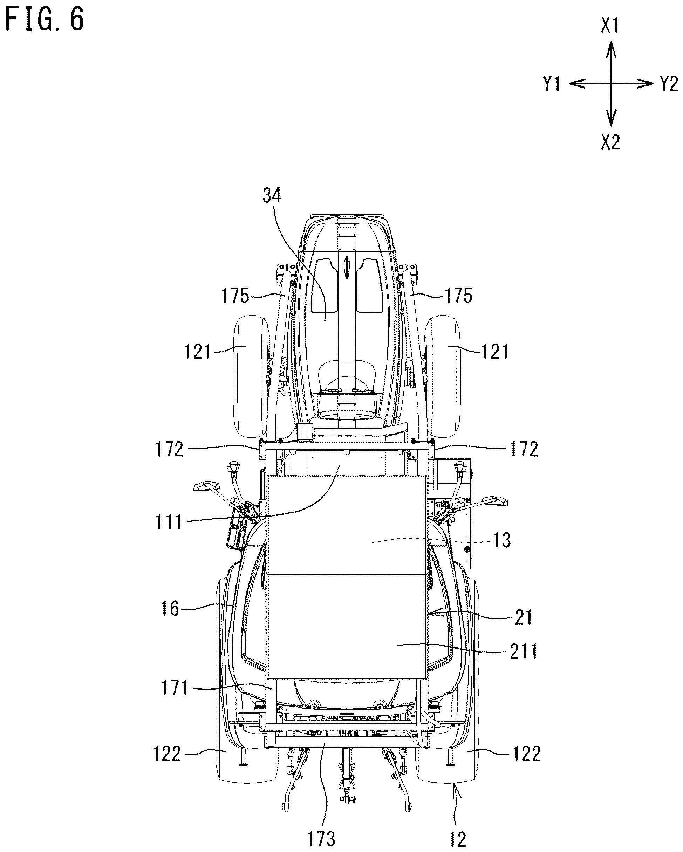

The cover 111 and the hood 34 are disposed forward of the cabin 16. As illustrated in FIGs. 2 and 6, each of the cover 111 and the hood 34 is smaller in dimension in the vehicle-width direction than the cabin 16. The hood 34 is smaller in dimension in the vehicle-width direction than the cover 111.

The work vehicle 10 of the present embodiment includes the cabin 16, but does not necessarily include the cabin 16. The work vehicle 10 may include, in place of the cabin 16, a canopy or a rollover protective structure (ROPS). If the work vehicle 10 does not include the cabin 16, the tank unit 21 is supported by the installation frame 17 and is located above the driver's seat 15.

### [Traveling device 12]

The traveling device 12 includes the front wheels 121 and the rear wheels 122 (see FIG. 6). The front wheels 121 are respectively disposed leftward and rightward of a front portion of the vehicle body 11. The rear wheels 122 are respectively disposed leftward and rightward of a rear portion of the vehicle body 11. The maximum dimension between the left and right rear wheels 122 in the vehicle-width direction is larger than the maximum dimension between the left and right front wheels 121 in the vehicle-width direction. The maximum dimension between the left and right rear wheels 122 in the vehicle-width direction corresponds to the maximum width dimension of the work vehicle 10.

The front wheels 121 and/or the rear wheels 122 are rotated by the motive power from the motor 31. The front wheels 121 and/or the rear wheels 122 to be rotated by the motive power from the motor 31, i.e., the driving wheels may be crawlers (endless track).

### [Drive device 14]

As described above, the drive device 14 includes the fuel cell 24, the battery unit 30, and the motor 31.

The fuel cell 24 is disposed on the chassis 41 and located near the front of the vehicle body 11 (see FIG. 9). The motor 31 is located rearward of the fuel cell 24 (see FIG. 8). The battery unit 30 is located outward of the vehicle body 11 in the vehicle-width direction (see FIG. 1). The battery unit 30 is attached to the chassis 41 with the support structural body 37.

The fuel cell 24 generates electric power from hydrogen gas in order to rotate the motor 31. The fuel cell 24 (see FIG. 9) includes a cell casing 241 having an approximately rectangular box shape, and a fuel cell stack 242 disposed in the cell casing 241. The fuel cell stack 242 includes a plurality of battery cells. The plurality of battery cells each include a cathode and an anode. A plurality of single cells are in a stacked state. Electric power is generated by each of the plurality of battery cells and is collectively output to the battery unit 30.

The motor 31 includes a rotor configured to rotate and a stator including a plurality of coils. The motor 31 includes an output shaft coupled to the power transmission mechanism 333 in the gear case 33 (see FIG. 8). The motor 31 is located rearward of the fuel cell 24 and below the second radiator 49.

### [Tank unit 21]

The tank unit 21 (see FIG. 9) includes the tank 13 and the tank case 211 accommodating the tank 13. The tank 13 is a high-pressure container having an approximately cylindrical shape. The tank 13 is made of, for example, a fiber-reinforced resin reinforced with carbon fibers or glass fibers. In the present embodiment, three tanks 13 each having a cylindrical shape are fixed to the tank case 211 with their axial directions oriented in parallel with the vehicle-width direction. The number of tanks 13 is not limited to three.

The tank case 211 is a box body capable of accommodating the tank(s) 13. The tank case 211 has a box shape covering the entire tank(s) 13 accommodated therein. The tank case 211 includes an openable/closable door 213 (see FIG. 1) disposed on one side or each side of the tank case 211 in the vehicle-width direction, so that the tank case 211 is openable in the vehicle-width direction. The tank case 211 is disposed above the roof 164, i.e., spaced apart from the roof 164 in the up-down direction. The tank case 211 is fixed to an upper frame portion 171 of the installation frame 17. The tank case 211 is made of a metal such as aluminum or steel to protect the tank 13 from external thermal and physical influences.

The tank 13 is disposed above the cabin 16 (the driver's seat 15). Therefore, the fuel cell 24, the filling unit 25, the motor 31, and the battery unit 30 are arranged in the vehicle body 11 with a great degree of freedom. In a case where a conventional internal combustion engine-equipped work vehicle is converted into the work vehicle 10 including the fuel cell 24 and the motor 31, which is described in the present embodiment, there is no necessity to largely change the arrangement of the respective components.

The tank 13 is coupled to the rear pipe 22r and the front pipe 22f via a valve unit 212 (see FIG. 9). The rear pipe 22r (see FIG. 3) is a gas inlet channel connecting the filling port 26 for hydrogen gas and the valve unit 212 to guide the hydrogen gas from the filling port 26 toward the tank 13. The front pipe 22f (see FIG. 2) is a gas outlet channel connecting the fuel cell 24 and the valve unit 212 to guide the hydrogen gas in the tank 13 toward the fuel cell 24. The hydrogen gas that is introduced from the outside of the vehicle through the filling port 26 is stored in the tank 13 and is supplied to the fuel cell 24. The valve unit 212 includes, for example, an open-close valve and a reducing valve. The valve unit 212 adjusts a flow rate of the hydrogen gas stored in the tank 13 to a predetermined value. The hydrogen gas the flow rate of which has been adjusted is guided to the fuel cell 24 through the front pipe 22f.

### [Installation frame 17]

The installation frame 17 (see FIG. 1) is a frame structure with which the tank 13 is installed on the vehicle body 11. The installation frame 17 of the present embodiment includes the upper frame portion 171 supporting the tank 13 as well as first front frame portions 172, second front frame portions 175, and a rear frame portion 173 forming a frame for supporting the upper frame portion 171. The tank case 211 is attached to the upper frame portion 171. In other words, the upper frame portion 171 supports the tank 13 via the tank case 211. The specific configuration of the installation frame 17 is described below.

The filling unit 25 is disposed on the rear frame portion 173 (see FIG. 3). The filling unit 25 has the gas filling port 26 to which the gas filling nozzle of the hydrogen gas supply machine (not illustrated), which is placed separately from the vehicle, is connected in filling the tank 13 with hydrogen gas.

### [Radiator]

The work vehicle 10 (see FIGs. 4 and 5) includes a cooling system for cooling the fuel cell 24, the motor 31, a step-up circuit 80, an inverter 81, DC/DC converters 82 and 83, and the like with a coolant. The work vehicle 10 includes the first radiator 48 and the second radiator 49 each constituting a part of the cooling system. As illustrated in FIG. 9, the first radiator 48 is located forward of the fuel cell 24, and the second radiator 49 is located rearward of the fuel cell 24.

The first radiator 48 is a radiator configured to cool the components other than the fuel cell 24. The second radiator 49 is a radiator configured to cool the fuel cell 24.

The first radiator 48 is connected to electrical components (heat generating components) to be cooled, for the motor 31, the step-up circuit 80, the inverter 81, and the DC/DC converters 82 and 83, via a first cooling flow channel (not illustrated) provided with a circulation pump. The first radiator 48 cools the coolant supplied thereto via the first cooling flow channel, by heat exchange with outside air.

The second radiator 49 is connected to the fuel cell 24 via a second cooling flow channel (not illustrated) provided with a circulation pump. The second radiator 49 cools the coolant supplied thereto via the second cooling flow channel, by heat exchange with outside air.

The first radiator 48 includes a first fan 481. The second radiator 49 includes a second fan 491. The first fan 481 encourages the heat exchange with the coolant by its rotation that allows air to pass through the first radiator 48. The second fan 491 encourages the heat exchange with the coolant by its rotation that allows air to pass through the second radiator 49.

### [Battery unit 30]

The battery unit 30 stores electric power to be supplied to the motor 31. The battery unit 30 (see FIG. 9) includes the battery 300 (a battery pack) and a housing 307 accommodating the battery 300. The battery 300 temporarily stores the electric power generated by the fuel cell 24, and outputs the electric power to an electric device such as the motor 31. The battery 300 includes a plurality of battery cells. The battery 300 is a rechargeable secondary battery such as a lithium-ion battery or a lead-acid battery.

### [Electrical system]

The work vehicle 10 includes a junction box 75. The junction box 75 is an electrical connection box for relay connection and distribution of the electric power output from the battery unit 30.

The fuel cell 24 is connected to the inverter 81 (see FIG. 5) via the step-up circuit. The battery unit 30 is connected to the inverter 81 via the junction box 75. The inverter 81 is electrically connected to the motor 31. The inverter 81 converts DC electric power output from the step-up circuit into three-phase AC electric power, and outputs the three-phase AC electric power to the motor 31.

The work vehicle 10 includes a low-voltage electrical component operable at a voltage lower than a voltage at which the motor 31 operates. The low-voltage electrical component receives electric power stepped down by a step-down circuit, via the junction box 75. The work vehicle 10 of the present embodiment includes, as the low-voltage electrical component, the battery unit 30, the radiators 48 and 49, and an air conditioner 74. The work vehicle 10 includes, as the step-down circuit, the first DC/DC converter 82 and the second DC/DC converter 83.

### [Tank case]

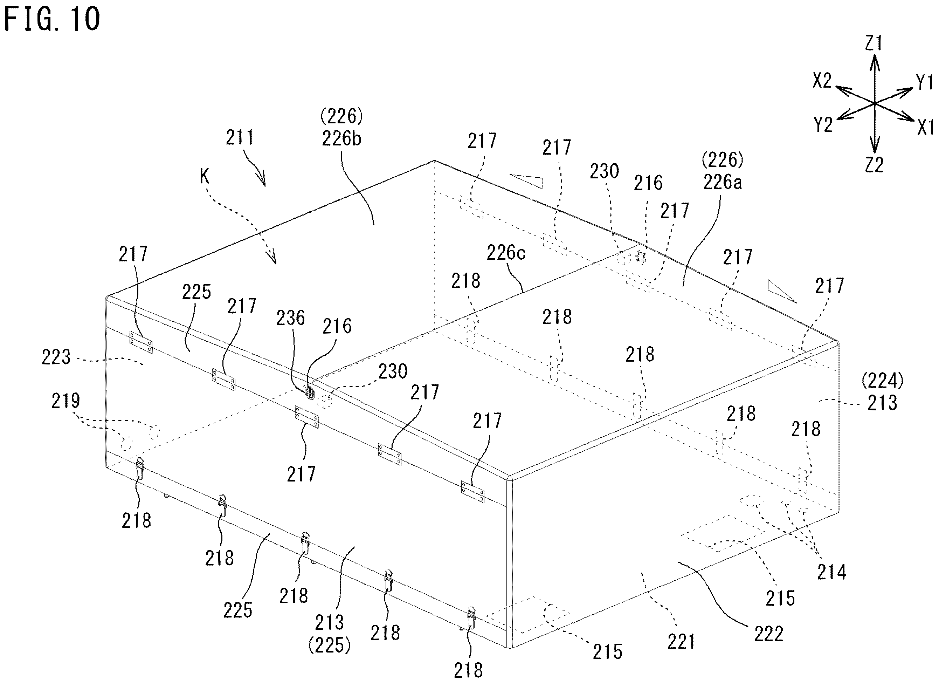

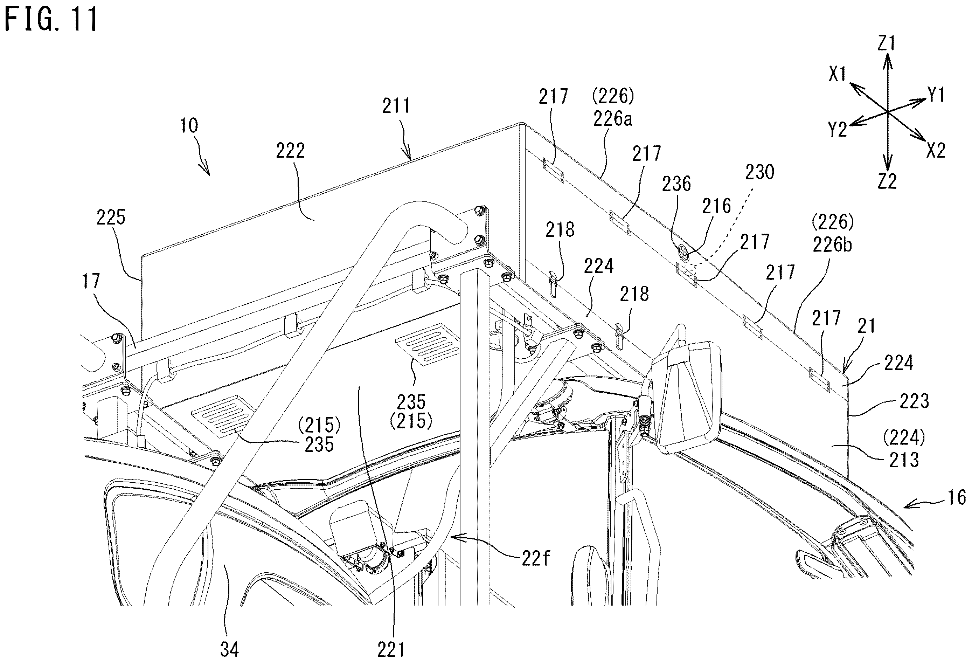

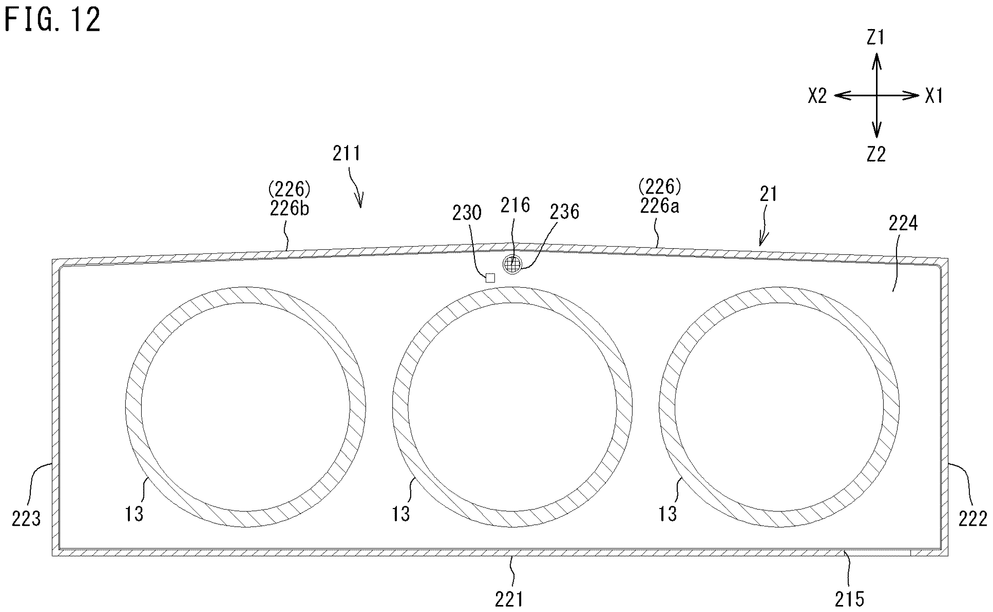

FIG. 10 is a schematic perspective view illustrating the tank case. FIG. 11 is an explanatory view of a placement of the tank case in the work vehicle. FIG. 12 is a schematic sectional view of the tank and the tank case. As illustrated in FIGs. 10 and 11, the work vehicle 10 of the present disclosure includes the tank case 211. The tank case 211 is an approximately parallelepiped-shaped box body, and includes a lower plate 221, a front side plate 222, a rear side plate 223, a left side plate 224, a right side plate 225, and an upper plate 226. The upper plate 226 includes a front upper plate 226a and a rear upper plate 226b. The front upper plate 226a is inclined downward toward the front side (i.e., in the direction of arrow X1). The rear upper plate 226b is inclined downward toward the rear side (i.e., in the direction of arrow X2). The tank case 211 has the highest height at a connection position 226c between the front upper plate 226a and the rear upper plate 226b. Therefore, if hydrogen leaks in the tank case 211, the hydrogen is naturally collected below the connection position 226c.

As illustrated in FIGs. 10 to 12, the tank case 211 has a first vent 215 in the lower plate 221. The first vent 215 is open downward. Therefore, even when rain falls on the tank case 211, there is a low possibility that the rain enters the tank case 211 through the first vent 215. The first vent 215 is provided with a cover 235 for reducing a possibility that insects and the like enter the first vent 215. In the tank case 211 of the present disclosure, the first vent 215 is formed in a front end portion of the lower plate 221; however, a position where the first vent 215 is formed is not limited thereto. For example, the first vent 215 may be formed in a rear end portion of the lower plate 221, or may be formed in both the front end portion and the rear end portion of the lower plate 221.

In the tank case 211, rain on the front upper plate 226a naturally flows forward, whereas rain on the rear upper plate 226b naturally flows rearward. Therefore, rain hardly collects on the upper plate 226 of the tank case 211. According to the work vehicle 10 of the present disclosure, the upper plate 226 of the tank case 211 is inclined in the front-rear direction. Alternatively, the upper plate 226 may be inclined in the left-right direction.

The tank case 211 has second vents 216 formed in upper portions of the left and right side plates 224 and 225. The left side plate 224 and the right side plate 225 each have the largest dimension in the height direction at a position where each of the left side plate 224 and the right side plate 225 is in contact with the connection position 226c.

With respect to the tank 13 accommodated in the tank case 211, the lower plate 221 of the tank case 211 is disposed below the tank 13, the front plate 222 of the tank case 211 is disposed forward of the tank 13, the rear plate 223 of the tank case 211 is disposed rearward of the tank 13, the left side plate 224 of the tank case 211 is disposed leftward of the tank 13, the right side plate 225 of the tank case 211 is disposed rightward of the tank 13, and the upper plate 226 of the tank case 211 is disposed above the tank 13.

The tank case 211 has the first vent 215 in the lower plate 221 at a position below the tank 13 accommodated in the tank case 211. It should be noted that the tank case 211 of the present embodiment has two first vents 215. One of the first vents 215 is located near the left side plate 224 and forward of a frontmost one of the tanks 13, and the other first vent 215 is located near the right side plate 225 and forward of the frontmost tank 13.

The tank case 211 has the second vents 216 in the left and right side plates 224 and 225 at positions higher than the tank 13 accommodated in the tank case 211. The second vents 216 are open in the upper portions of the left and right side plates 224 and 225 at positions adjacent to the connection position 226c. The second vents 216 are provided with meshed covers 236 for reducing a possibility that insects and the like enter the second vents 216. The tank case 211 also has a plurality of through holes 214 formed in a front side of the lower plate 221, and the front pipe 22f and a wire connected to the fuel cell 24 pass through the through holes 214. The tank case 211 also has a through hole 219 formed in a lower right portion of the rear side plate 223, and the rear pipe 22r passes through the through hole 219.

In the tank case 211 having the configuration described above, air flows into the tank case 211 through the first vents 215, comes into contact with the tank 13, flows upward within the tank case 211 by natural convection, and finally flows out of the tank case 211 through the second vents 216. This airflow ventilates the tank case 211 and contributes to reduction in a possibility of a temperature rise of the tank 13.

If hydrogen leaks in the tank case 211, the hydrogen is naturally collected below the connection position 226c, and then is efficiently discharged from the tank case 211 along a flow of the ventilation. Therefore, even if hydrogen leaks in the tank case 211, an amount of the hydrogen remaining in the tank case 211 can be reduced. In other words, the tank case 211 is capable of promptly discharging hydrogen, which is leaked in the tank case 211, from the tank case 211 by air naturally flowing from the first vents 215 to the second vents 216.

The work vehicle 10 of the present disclosure further includes hydrogen sensors 230 each configured to detect leakage of hydrogen in the tank case 211. Each of the hydrogen sensors 230 is disposed in the tank case 211 at a position adjacent to a corresponding one of the second vents 216. Preferably, each of the hydrogen sensors 230 is disposed in the tank case 211 at a position below a corresponding one of the second vents 216. If hydrogen leaks in the tank case 211, the leaked hydrogen rises within the tank case 211, and then is naturally collected below the connection position 226c. Thereafter, the hydrogen flows out of the tank case 211 through the second vents 216. Each of the hydrogen sensors 230 located at the position below and adjacent to a corresponding one of the second vents 216 is capable of reliably detecting hydrogen immediately before flowing out of the corresponding second vent 216. According to the work vehicle 10 of the present disclosure, therefore, if hydrogen leaks in the tank case 211, the hydrogen sensors 230 are capable of reliably detecting the leaked hydrogen. In the present embodiment, as an example, the hydrogen sensors 230 are disposed adjacent to and below the second vents 216; however, the placement of the hydrogen sensors 230 relative to the second vents 216 is not limited thereto. For example, the hydrogen sensors 230 may be disposed adjacent to and sideward of the second vents 216, or may be disposed adjacent to and above the second vents 216. In the case where the tank case 211 has two second vents 216 as described in the present embodiment, preferably, two hydrogen sensors 230 are disposed in correspondence with the second vents 216. In the work vehicle 10 of the present disclosure, the second vents 216 are open in the left and right sides of the tank case 211, respectively. Alternatively, the work vehicle 10 of the present disclosure may have one second vent 216.

### [Openable/closable door]

As illustrated in FIGs. 10 to 13, the tank case 211 includes an openable/closable door 213 constituting a part of the left side plate 224, and an openable/closable door 213 constituting a part of the right side plate 225. The left openable/closable door 213 is supported on the left side plate 224 in an openable/closable manner with a plurality of hinges 217. The right openable/closable door 213 is supported on the right side plate 225 in an openable/closable manner with a plurality of hinges 217. In the tank case 211, each of the left side plate 224 and the right side plate 225 may be entirely constituted of a corresponding one of the openable/closable doors 213. In the tank case 211, alternatively, one of the openable/closable doors 213 may constitute a part of the front side plate 222, and the other openable/closable door 213 may constitute a part of the rear side plate 223. In the present embodiment, the openable/closable doors 213 are opened in the up-down direction. Alternatively, the openable/closable door 213 may be opened in the left-right direction.

Each of the openable/closable doors 213 can be fixed to a corresponding one of the left side plate 224 and the right side plate 225 with a plurality of fixing metal fittings 218 with a single touch. In other words, each of the openable/closable doors 213 can be held in a closed state with a single touch. In addition, each of the openable/closable doors 213 can be opened with a single touch. Each of the openable/closable doors 213 of the present embodiment can be opened and closed with ease by the hinges 217 and the fixing metal fittings 218. In the work vehicle 10 of the present disclosure, alternatively, each of the openable/closable doors 213 may be fixed to a corresponding one of the left side plate 224 and the right side plate 225 with bolts rather than the hinges 217 and the fixing metal fittings 218. In this case, the openable/closable doors 213 can be closed by fastening the bolts and can be opened by removing the bolts.

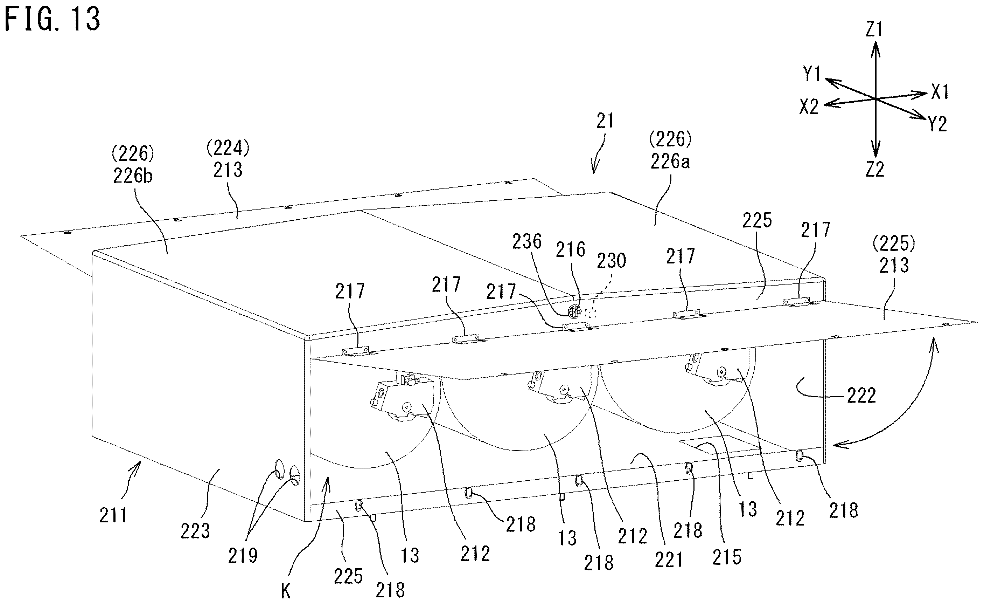

As illustrated in FIG. 13, according to the tank case 211, when a user opens the openable/closable door 213 constituting a part of the right side plate 225, the valve unit 212 appears before the user's eyes. Therefore, the work vehicle 10 of the present disclosure is capable of facilitating a maintenance check on the valve unit 212 and its surroundings by opening the right openable/closable door 213. According to the tank case 211, furthermore, the openable/closable door 213 constituting a part of the left side plate 224 is openable. Therefore, the work vehicle 10 of the present disclosure is capable of facilitating a confirmation of the entire tank 13 and a maintenance check on the pipes 22 (the front pipe 22f and the rear pipe 22r) disposed around the tank 13, by opening both the left and right openable/closable doors 213.

The foregoing embodiments are in all aspects illustrative and not restrictive. The scope of the present invention is defined by the claims rather than the foregoing embodiments, and includes all modifications within the scope of the configurations recited in the claims and their equivalences.

### REFERENCE SIGNS LIST

- 10: work vehicle
- 11: vehicle body
- 13: tank (hydrogen tank)
- 15: driver's seat
- 16: cabin
- 22: pipe (hydrogen pipe)
- 24: fuel cell (fuel cell module)
- 31: motor (electric motor)
- 211: tank case
- 215: first vent
- 216: second vent
- 221: lower plate
- 222: front side plate (third side plate)
- 223: rear side plate (fourth side plate)
- 224: left side plate (second side plate)
- 225: right side plate (first side plate)
- 226: upper plate
- 230: hydrogen sensor

## Claims

1. A work vehicle comprising:
a vehicle body;
a driver's seat, an electric motor, and a fuel cell module each installed on the vehicle body;
a cabin disposed around the driver's seat;
a hydrogen pipe and a hydrogen tank through and from which hydrogen is supplied to the fuel cell module; and
a tank case disposed above the cabin and accommodating the hydrogen tank,
wherein
the tank case includes a lower plate covering a lower surface of the hydrogen tank, side plates covering side surfaces of the hydrogen tank, and an upper plate covering an upper surface of the hydrogen tank, and
the tank case has a first vent that is open in the lower plate.

2. The work vehicle according to claim 1, wherein
the tank case further has a second vent being open in an upper portion of the side plate.

3. The work vehicle according to claim 2, further comprising
a hydrogen sensor,
wherein
the hydrogen sensor is disposed in the tank case at a position adjacent to the second vent.

4. The work vehicle according to claim 2 or 3, wherein
the upper plate is disposed to be inclined with respect to the lower plate, and
the second vent is open in the upper portion of the side plate adjacent to a portion of the upper plate, the portion being farthest from the lower plate.

5. The work vehicle according to claim 2 or 3, wherein
the tank case includes a pair of the side plates that are opposite to each other, and has a pair of the second vents that are respectively open in the side plates.

6. The work vehicle according to claim 1, wherein
the tank case has an openable/closable door supported at the side plate in an openable/closable manner with a hinge.

7. The work vehicle according to claim 6, wherein
the hydrogen tank includes a valve configured to adjust an amount of hydrogen flowing into the hydrogen tank and an amount of hydrogen flowing out of the hydrogen tank, and
the side plate facing the valve is a first side plate, and the openable/closable door is disposed on the first side plate.

8. The work vehicle according to claim 7, wherein
the tank case includes a second side plate extending in parallel with the first side plate, and
the openable/closable door is further disposed on the second side plate.

9. The work vehicle according to claim 6 or 7, wherein
the upper plate is inclined with respect to the lower plate in the tank case.

10. The work vehicle according to claim 9, wherein
the tank case includes a third side plate and a fourth side plate each extending perpendicular to the first side plate and the second side plate, and
the upper plate is inclined downward toward at least one of the third side plate and the fourth side plate.
